# EUROPEAN PATENT APPLICATION

(11) **EP 3 489 866 A1**
(43) Date of publication of application: **29.05.2019**
(21) Application number: 17306652.3
(22) Date of filing: 28.11.2017
(51) Int. Cl.: G06Q 10/00

(54) **METHOD AND APPARATUS MANAGING ENTITIES IN A SPACE**

(71) Applicant: Ecole Nationale de l'Aviation Civile, 31400 Toulouse Cedex (FR)
(72) Inventor: CONVERSY, Stéphane, 31400 TOULOUSE (FR); GARCIA, Jérémy, 31400 TOULOUSE (FR); BUISAN, Guilhem, 31400 TOULOUSE (FR)
(74) Representative: Bell, Mark

(57) **Abstract**

The movements and interactions of mobile physical entities such as vehicles, individuals and so on in a physical space can be monitored and controlled by defining paths and regions with associated signalling operations in a graphical representation. The signalling operations can be defined to provide information as to movements and interactions to a system user, or to provide information or instructions to the entities or their occupants. Regions and paths may be connected, for example through the graphical interface, to pass signalling operations to each other so as to define complex interactions. Logic units may be provided between regions and paths to further process signalling operations so as to support further degrees of complexity. The operations of regions, paths, entities, connections and logical units can be presented in the graphical representation, for example as finite state machines.

## Description

### Field of the invention

The present invention relates generally to the remote managing of entities in a physical space.

### Background of the invention

Generally speaking, two classes of oversight of mobile entities can be defined. One class may comprise supervisors, air traffic controllers, vessel traffic controllers and the like who have a general responsibility for entities in a given area. The working conditions of both of these classes of individuals are affected by current technological trends, and furthermore significant convergence of their roles. On one hand, vehicles are increasingly autonomous, so that the role of the driver or pilot is tending to disappear altogether, or to be entrusted to a remote operator who can take over control of the vehicle via a telecommunications channel at critical instants. Meanwhile, supervision tasks may be increasingly supported by information technology, so that one individual can be expected to supervise an ever larger area, or increasingly, to supervise several different areas, with the relevant traffic information being relayed from the respective areas via telecommunications means. Accordingly, in both cases individuals for vehicle oversight are increasingly remote from the vehicles for which they are responsible, and it is increasingly common to need to manage multiple such entities, over a large physical space.

It is desirable to integrate automation into a supervision interface so as to reduce the overall work load of such individuals without reducing their situational awareness or the availability of direct control where appropriate.

### Summary of the invention

In accordance with the present invention in a first aspect there is provided an entity management system for managing a mobile entity in a physical space. The system comprises a representation generator adapted to generate a graphical representation of the physical space, a region manager adapted to receive user input defining one or more regions belonging to one of a plurality of predefined types and to represent the regions in the graphical representation, and a management engine associating the regions with one or more entities, each predefined type being associated with one or more signalling actions triggered by a respective entity interacting with a corresponding region in a specified manner.

In accordance with a development of the first aspect, the region manager is adapted to determine when any entity interacts with any region associated with that respective entity in a corresponding specified manner, and where a respective entity interacts with a region in that specified manner, to instruct the management engine to initiate the signalling action associated therewith.

In accordance with the present invention in a second aspect there is provided a method of managing the behaviour of a mobile entity in a physical space. The method comprises the steps of:
defining a graphical representation of the physical space,
receiving user input defining one or more regions belonging to one of a plurality of predefined types in the graphical representation, the regions being associated with one or more entities, wherein each predefined type is associated with one or more signalling actions triggered by a respective entity interacting with a corresponding region in a specified manner, and representing the one or more regions in the graphical representation.

In accordance with a development of the second aspect the method comprises the further steps of determining when any entity interacts with any region associated with that respective entity in a corresponding specified manner, and where a respective entity interacts with the region in the specified manner, initiating the signalling action associated therewith.

In accordance with a development of the second aspect the interactions with an entity triggering the signalling actions, or the signalling actions themselves relate to the movement of the entity in the physical space.

In accordance with a development of the second aspect a path is defined through the physical space, and the region defines a termination point of the path, wherein a first alternative signalling action is initiated by the path in a case where the entity leaves the path via the termination point.

In accordance with a development of the second aspect a path is defined through the physical space, and wherein the region defines an entry point of the path, wherein a first alternative signalling action is initiated by the path in a case where an entity enters the path via the entry point.

In accordance with a development of the second aspect the region defines a wait zone, wherein the signalling action comprises an instruction to an entity entering said region in a first mode of operation to halt, and wherein said signalling action comprises an instruction to the entity entering the region in a second mode of operation to proceed.

In accordance with a development of the second aspect the region defines a fork region, wherein the signalling action comprises an instruction to the entity entering the region in a first mode of operation to proceed along a first path, and wherein the signalling action comprises an instruction to the entity entering the region in a second mode of operation to proceed along a second path.

In accordance with a development of the second aspect the signalling action further comprises an instruction to any other region specifying a desired mode of operation thereof.

In accordance with a development of the second aspect the method comprises a further step of defining a connection between a first region and a further region wherein the instruction to any other region is issued to the further region in reaction to a relationship between an entity and the first region.

In accordance with a development of the second aspect the signalling action comprises sending a signal to the entity.

In accordance with a development of the second aspect a representation of the behaviour of any region is included in the graphical representation.

In accordance with a development of the second aspect the transmission of signals between any plurality of regions is processed in accordance with a predefined Boolean logic or state-machines.

In accordance with the present invention in a first aspect there is provided a computer program comprising instructions adapted to implement the steps of the second aspect.

### Brief Description of the Drawings

The above and other advantages of the present invention will now be described with reference to the accompanying drawings, for illustration purposes only, in which:
Figure 1 shows a method of managing the behaviour of a mobile entity in a physical space in accordance with an embodiment;
Figure 2 shows a method of managing the behaviour of a mobile entity in a physical space in accordance with an embodiment;
Figure 3 shows an example of a graphical representation generated in accordance with an embodiment;
Figure 4 shows an example of a graphical representation generated in accordance with a further embodiment;
Figure 5 shows an example of a graphical representation generated in accordance with a further embodiment;
Figure 6 shows an example of a graphical representation generated in accordance with a further embodiment;
Figure 7 shows an entity management system for managing a mobile entity in a space in accordance with an embodiment;
Figure 8 shows a generic computing system suitable for implementation of embodiments of the invention;
Figure 9 shows a smartphone device adaptable to constitute an embodiment; and
Figure 10 shows an Air Traffic control desk adaptable to constitute an embodiment.

### Detailed description

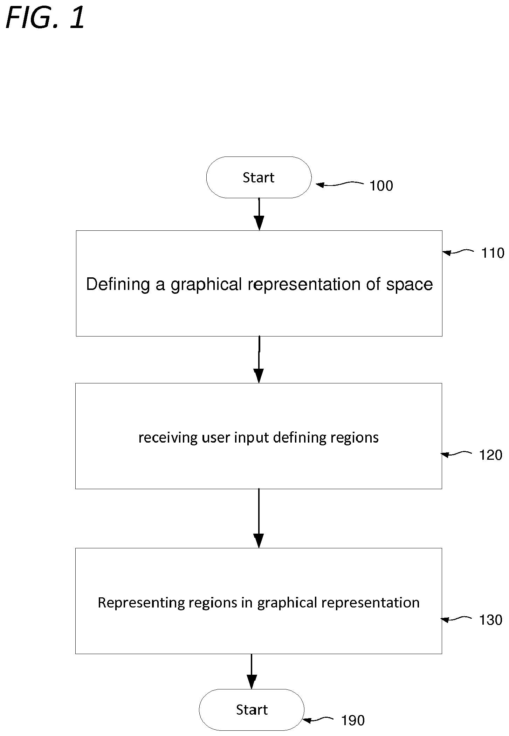

Figure 1 shows a method of managing the behaviour of a mobile entity in a physical space in accordance with an embodiment.

As shown in figure 1, the method starts at step 100 before proceeding to step 110, at which a graphical representation of the physical space is defined. The physical space in question may be any physical space, regardless of scale. The graphical representation may be synthesized on the basis of stored data representing the physical space, or may be a live representation of the physical space in question for example from a video feed.

The method next proceeds to step 120 at which user input is received defining one or more regions belonging to one of a plurality of predefined types in the graphical representation. The regions are associated with one or more said entities, wherein each said predefined type is associated with one or more signalling actions triggered by a respective said entity interacting with a corresponding said region in a specified manner.

At any given time there may be no entities, one entity, or many entities in the physical space. Even if no entities are in the physical space, a region may be considered to be associated with one or more entities in the sense that has a defined relationship with all entities of a particular type, even if no such entities are present in the physical space.

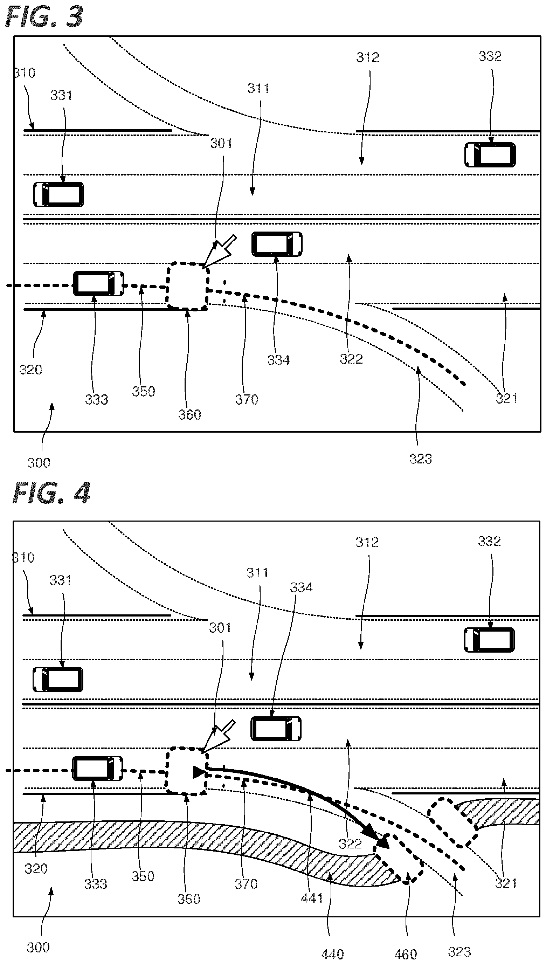

The interactions with an entity triggering the signalling action, or the signalling actions themselves may relate to the movement of the entity in the physical space. Examples of region types, and their possible signalling actions are presented below with reference to figures 3, 4, 5 and 6.

The entities in question might be any entity of interest present in the physical space. For example, vehicles on a road, planes in an airport, trains in a railway network, products in a production line, chemicals in a reaction flow, people or animals in any environment, and so on. Still further, the entities may be data in a data or storage network. Still further, regardless of the nature of the physical space, the entities need not be real physically embodied entities, but may also comprise entities in a computer generated, virtual or augmented reality environment. Different classes of entity may be defined, with respect to which respective region types may interact differently, or in reaction to which they may perform different signalling actions.

The method finally proceeds to step 130 at which one or more regions are represented in the graphical representation, before terminating at step 190.

It will be appreciated that on the basis of these steps the situation awareness of the user is enhanced by the presentation of a complete graphical representation of the automations applied across the physical space.

Furthermore, the situation awareness and efficiency of the user is enhanced by possibility of establishing automations by graphical interactions.

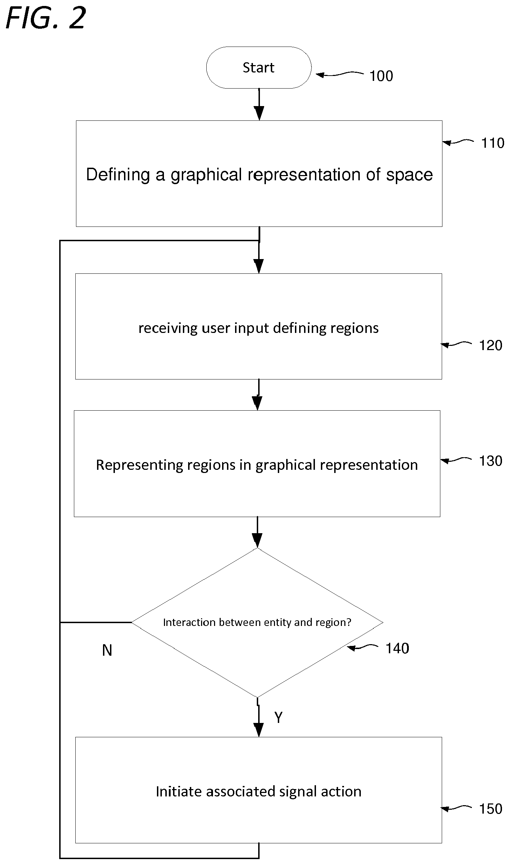

Figure 2 shows a method of managing the behaviour of a mobile entity in a physical space in accordance with an embodiment.

As shown in figure 1, the method starts at step 100 and proceeds through step 110, 120 and 130 as described with reference to figure 1. After step 130 the method proceeds to step 140 at which it is determined whether any entity interacts with any region associated with that respective entity in a corresponding specified manner. In a case where an entity is determined to interact with any region associated with that respective entity in a corresponding specified manner, the method proceeds to step 150 at which the signalling action associated with the region, the entity and the interaction is initiated. As shown, after initiating the signal action at step 150 the method may loop back to step 120.

The interaction between the region and the entity may comprise the entity entering the region, leaving the region, performing some particular activity in the region, or otherwise. The interaction may be detected by any suitable detection, tracking or communication mechanism, including by way of example radar, GPS, radio, optical or sonar triangulation, ground pressure sensors, vibration sensors, breaking of a light beam, sound sensors, PIR sensors, computer vision, and so on. Furthermore, interactions may be manually entered by the user.

In a case where an entity is not determined to interact with any region associated with that respective entity in a corresponding specified manner, the method may loop back to step 120.

It will be appreciated that certain variants of the method of figures 1 and 2 are possible. In particular, it may be desirable to redefine the basic graphical representation of the physical space by looping back to step 110 from time to time. Similarly, on determining that no interaction has occurred, the process might not necessarily look for new user input of new regions by looping back to step 120 on every iteration, and might loop back to steps 130 or 140 in some iterations. Still further, the method may look for certain inputs in parallel- for example, some or all of changes to the underlying physical space, entities, regions and interactions between them may be monitored in parallel.

Figure 3 shows an example of a graphical representation generated in accordance with an embodiment. As shown in figure 3 there is provided a section of road 300, having two lanes 311, 312 in a first direction 310 (right to left), and two lanes 321, 322 in a second direction 320 (left to right). An entity shown as a car 331 is shown as travelling in the first lane 311 in the first direction 310, a entity shown as a car 332 is shown as travelling in the second lane 312 in the first direction 310, an entity shown as a car 333 is shown as travelling in the first lane 321 in the second direction 320, and an entity shown as a car 334 is shown as travelling in the second lane 322 in the second direction 320. The road section 300, or alternatively a road direction 310 or 320, or a lane 311, 312, 321 or 322 may correspond to the physical space 300 as discussed above. Road section 300 has an exit 323.

A region 360 has been defined by user input as indicated by the cursor 301, and represented in the graphical representation. Regions defined in accordance with the present invention may be of any form, including regular and irregular polygons, circles and ellipses, and arbitrary shapes. These may be defined by the user by any convenient means, as known to the skilled person. For example, shapes may be defined by selection from a palette of predefined shapes, by sequentially defining the shape's vertices, by manually tracing the edges if the shape with a cursor and so on. The shape may be defined in terms of a raster or vector image.

In accordance with the present embodiment, this region belongs to a predefined type as discussed hereafter.

A path 350 is defined through the physical space, and the region 360 is of a predefined type that defines a termination point of the path 360. The path may be drawn freehand by a user. It may be defined on a raster or vector basis. Furthermore, the path may be generated from external data such as may be provided by a navigation device, flight plan, or the like.

As discussed above, regions are associated with one or more entities, and in this case entity 333 is shown as following the path 350. In accordance with the present embodiment, a signalling action is initiated by the region 360 in a case where the entity leaves the path via the termination point.

On this basis, when the entity leaves path 350 and enters a further path 270 via the region 360, a signalling action is initiated. The signalling action may comprise by way of example the transmission of a message to the entity, the transmission of a message to the user, or to any other destination. The signalling action may comprise multiple transmissions to different destinations. The signalling action may comprise a modification of the graphical representation, for example through changing the colour or prominence of certain features, such as the path, the region or the entity or an indicator region that may be defined in the graphical region for this purpose. A text message may be presented via the graphical representation, or otherwise. The signalling action may comprise transmission via any suitable channel. It may be transmitted via any data network such as a WAN (e.g. the internet, GSM, UMTS), a LAN (e.g. wifi network or Ethernet), PAN (e.g. Bluetooth, Zigbee). The signalling action may be of any format, and may include text, graphical or audio content, or a combination of these. The signalling action may be formatted for a human addressee, for example in the form of a human readable text or audio message. The signalling action may be formatted for a machine recipient, for example on the basis of an API, or any suitable technical format having regard to the context. The signalling action may be transmitted merely for information or as a warning, or may contain instructions. Where the signalling action involves transmission to a machine recipient, these instructions may be directly operable by that machine.

By way of illustration of some of these possibilities, in the embodiment of figure 3 the signalling action may comprise the transmission of a machine readable instruction to the vehicle 360 to activate its "turn right" indicator lights.

The signalling action might additionally or alternatively comprise the transmission of an audible chime to be played to an occupant of the entity 350 to alert them to the change of status.

As such, the signalling action may comprise sending a signal to an entity.

The signalling action might additionally or alternatively comprise the changing of the colour of the region 360 from green to red, indicating its activation.

As such, a representation of the behaviour of any said region may be included in the graphical representation.

It will be appreciated that countless further additional or alternative components of the signalling action may be envisaged as a function of the context.

In a further embodiment, the region 360 might be seen as defining an entry point of the path 360, as well as or instead of the exit point of path 350. In such cases, the signalling action may be initiated by the path in a case where an entity enters the path via the entry point region 360.

It will be appreciated that the path 350, 360 itself may constitute a region in accordance with embodiments of the invention. While the arrival or departure of entities via specified regions might conveniently be handled using the entry and exit regions as discussed above, entry or exit of the path via some other point may initiate a signalling action of the path region, for example notifying a user of an unexpected arrival or departure, and possibly the specific location of this unexpected arrival or departure.

Figure 4 shows an example of a graphical representation generated in accordance with a further embodiment. As shown in figure 4 there is provided a section of road 300, as described with reference to figure 3 above. Additionally, there is provided a section of pavement 440, which is bisected by the exit 323. As shown, the path 370 follows exit 323.

In accordance with the embodiment of figure 4, a region 460 defined by the user in a manner similar to the region 360 as discussed above at the point on the pavement 440 where it is bisected by the exit 323. In accordance with the embodiment of figure 4 this region 460 may define a wait zone, wherein the signalling action comprises an instruction to said entity entering the region in a first mode of operation to halt, and wherein said signalling action comprises an instruction to the entity entering the region in a second mode of operation to proceed.

Such a wait zone may be seen as operating in a manner analogous to a traffic light or air strip stop bar, either authorizing the entity to proceed, or instructing it to wait.

Signalling actions may be performed by the wait region in any of the ways described above with respect to figure 3. By way of illustration of some possibilities of signalling actions, in the embodiment of figure 4 the signalling action may comprise the transmission of a machine readable instruction to an individual approaching on the pavement 440 to cease any ongoing music playback, and possibly emit an audible warning tone or message.

The signalling action might additionally or alternatively comprise the transmission of an instruction to a physical pedestrian crossing light in the vicinity of the real world crossing corresponding to the location shown in the graphical representation, to show a red light in the case of a wait status, and a green light in the case of a proceed status, or other conventional indication as appropriate.

The signalling action might additionally or alternatively comprise the changing of the colour of the region 460 from green to red, indicating its activation.

It will be appreciated that countless further additional or alternative components of the signalling action may be envisaged as a function of the context.

In the context of the present embodiment, by positioning such a wait zone the point on the pavement 440 where it is bisected by the exit 323, entities on the pavement section might be instructed to wait when a vehicle is approaching on the exit 323, or otherwise authorized to cross.

While in some embodiments the wait zone 460 may be switched between its different modes of operation by direct user interaction, or in response to a signal from any external system or sensor, it will be appreciated that the signalling action from the sensor 360 may provide a convenient basis for such changes of mode.

As such, the signalling action may comprise an instruction to any other region specifying a desired mode of operation thereof.

As shown, such a relationship is created by a further graphical interaction of the user. In particular, the user has traced a connector 441 from an output point associated with the first region 360, to an input region of the second region 460. As such, the method of figure 1 or 2 may comprise a further step of defining one or more connections between a first said region and one or more further said regions wherein the instruction to any other said region is issued to the further region in reaction to a relationship between an entity and the first region. For instance, the activation of a region such as the runway can trigger multiple stop regions all around it. Another case could be to connect multiple zones that might trigger the same alarm.

Interactions of this kind may be based on the predetermined behaviour for particular region types, so that for example the entry region type as described with respect to region 360 may be defined to emit a binary indication of its state, with for example a binary 1 indicating that an entity has entered the region in a defined time window, and the wait region type may be defined to switch to the "wait" mode when receiving a state command, with for example a binary 1 being taken as an indication to switch to the "wait" mode for a predetermined amount of time before reverting to the "proceed" mode indicating that an entity has entered the region in a defined time window. Alternatively, richer information might be shared, and a more sophisticated decision mechanism implemented to determine when the wait region switches between the two modes.

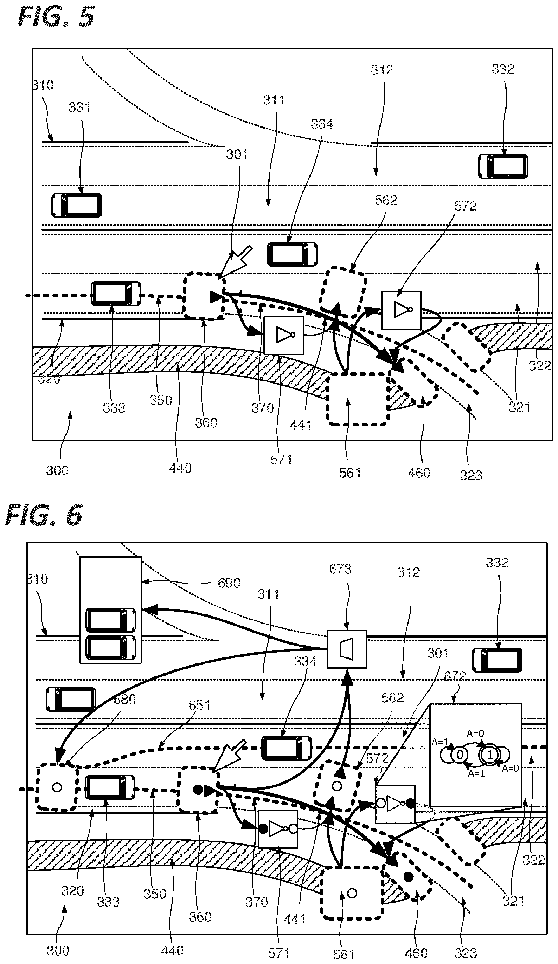

Figure 5 shows an example of a graphical representation generated in accordance with a further embodiment. As shown in figure 5 there is provided a section of road 300, as described with reference to figures 3 and 4 above. Additionally, there is provided a second entry region 561 on the pavement 440 just before the crossing with the exit 323, and a second wait region 562 on the path 441 just before the road bisects the pavement 440. By this means, it may be provided that where a pedestrian is detected in the second entry region 561, any approaching vehicles may be instructed to wait by means of the second wait region 562. Furthermore as shown, there is provided a first logic box 571 between an output of the first entry region 360 and the input of the second wait region 562, and a second logic box 572 between an output of the second entry region 561 and the input of the first wait region 460. As shown, the first and second logic boxes simply implement an inverter function, such that whatever signal either entry region sends to one wait region, the opposite signal is received by the other wait region. This means that in the context of this example, it is ensured that a pedestrian and a vehicle will never be instructed to proceed at the same time.

It will be appreciated that depending on the nature of the signals emitted by or expected by a particular region type, any type of logical function may be implemented by interface elements such as logic boxes 571 and 572.

In addition to interactions between entities and regions, other stimuli such as timing signals, count values and the like may be used as inputs to regions, paths and logic boxes. Human input may also be used in this regard, so that, for example human input may be required to authorise a signalling action or status change, or to prevent it taking place, possibly with constraints such as: the user has a certain period of time to authorise/cancel the action otherwise it is performed, or cancelled as the case may be. In certain embodiments, logical functions may conveniently be selected and added to the graphical representation by selection from a menu or a drag and drop type operation. The corresponding graphical elements may be provided with snap and glue functionality, whereby lines or paths may be associated with anchor points of the graphical elements corresponding to inputs or outputs with a reduced need for user precision, and whereby regions or logic boxes may be moved in the graphical representation without breaking established connections. Automatic routing may also be implemented to minimize the crossing of lines to provide improved clarity.

As such, transmission of signals between regions may be processed in accordance with a predefined Boolean logic or finite state machine.

Figure 6 shows an example of a graphical representation generated in accordance with a further embodiment. As shown in figure 6 there is provided a section of road 300, as described with reference to figures 3, 4 and 5 above.

As discussed above, many more complex logical arrangements may be envisaged for implementation by logic box features. For example, as shown in figure 6 a further logic box 673 is provided implementing a counting logic on the basis of information from the entry region 360 and the wait region 562, which determines the number of vehicles being held at any time. This information may be presented visually in the graphical representation by a value display region 690.

Additionally, there is provided a fork region 680, and a further path 651 the signalling action of such a fork region may comprises an instruction in a first mode of operation to an entity to proceed along a first path 350, and in a second mode of operation to proceed along a second path 651. By this means, entities can be directed to follow one path or another.

As shown in figure 6, by the fork region 680 receives input from the counting logic 673. On this basis, entities might be directed to the further path 651 when it is determined that the number of waiting entities has reached a threshold level, or on any other basis as defined by the user's selection, disposition and configuration of regions, logic blocks and paths as described above.

It will be appreciated that suitably specified region types and logic blocks may be assembled with connections as described above via the interactions of the user to define finite state machines. By enforcing finite state machine rules, the inadvertent creation of hidden states, race conditions and the like can be avoided.

Still further, region types, logic blocks and connections may themselves be defined as finite state machines, either by user interaction, or otherwise. In certain embodiments, the operation of these state machines may be presented in the graphical representation, for example as a conventional state transition diagram.

On this basis, as shown in figure 6 the logic box 672 is associated with a pop up window 672 presenting a finite state machine representation of the operation of the logic box 672. It will be appreciated that the manner in which the operating of each logic box, connection or region may vary depending on the complexity of the system as a whole, the complexity of the function performed by any given logic box, connection or region, and the scale and resolution of the graphical representation. For example, the operation of some or all logic box, connection or region may be illustrated permanently, or may appear when a user focuses on that particular element, for example on the basis of gaze tracker input, a mouse over event, or the like, or otherwise. It will be appreciated that any suitable means for presenting and defining the operation of each logic block may be used. For example, software code, logic tables, turing machines, combinations of standard logic gate elements (AND/OR/NOT), and the like, or any combination of these are all possible. Definitions may be imported as data files in any convenient format.

As shown in figure 6, each logic box and each region is provided with a graphical indication of its state. In figure 6 this representation takes the form of a coloured or shaded circle, with a filled circle indicating a logical 1 and an empty circle representing a logical 0. The pop up box 672 represents the corresponding state by encircling the current state. It will be appreciated that countless alternative manners of representing the state of each logic box, connection or region will occur to the skilled person. In particular, as regards wait regions as presented above, a convenient and universally understood representation may comprise a green indicator in a proceed state, and a red indicator in a wait state. This analogy may be developed still further by additionally including a dimmed green indicator in the wait state and a dimmed red indicator in the proceed state, so as to resemble a traditional traffic light. A state machine representation as discussed above might also be envisage with state transition arrows between representations of the traffic lights in these two states.

While embodiments of the method of figures 1 and 2 have been presented in figures 3, 4, 5 and 6 in the context of vehicles on a road and pedestrians on a pavement, it will be appreciated that other embodiments may be envisaged in any environment in which mobile entities are to be managed. This might include planes in an airport, trains in a railway network, products in a production line, chemicals in a reaction flow, people or animals in any environment, and so on. Still further, the entities may be data in a data or storage network. Still further, the entities need not be real physically embodied entities, but may also comprise entities in a computer generated, virtual or augmented reality environment, so long as this environment represents a physical space. As such, virtual or simulated entities may be managed, with a view for example of testing the management processes implement in the space, familiarisation exercises, and so on.

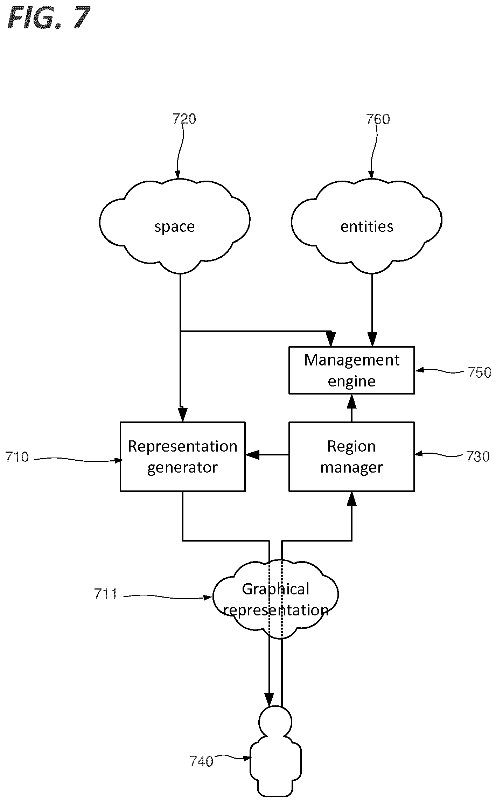

Figure 7 shows an entity management system for managing a mobile entity in a space in accordance with an embodiment. As shown, the system comprises a representation generator 710 adapted to generate a graphical representation 711 of the space 720. The system further comprises a region manager 730 adapted to receive input from a user 740 defining one or more regions belonging to one of a plurality of predefined types and to represent said regions in said graphical representation 711. The system finally comprises a management engine 750 associating the regions with one or more said entities 760, each said predefined type being associated with one or more signalling actions triggered by a respective said entity 760 interacting with a corresponding said region in a specified manner.

In certain variants, the region manager 730 may be adapted to determine when any entity 760 interacts with any said region associated with that respective entity in a corresponding specified manner, and where the respective entity interacts with said region in said specified manner, to instruct the management engine to initiate a signalling action associated therewith.

Further adaptations to the system of figure 7 may be envisaged to implement any of the features of any of the foregoing embodiments.

According to certain embodiments, the movements and interactions of mobile entities such as vehicles, individuals and so on in a physical space can be monitored and controlled by defining paths and regions with associated signalling operations in a graphical representation. The signalling operations can be defined to provide information as to movements and interactions to a system user, or to provide information or instructions to the entities or their occupants. Regions and paths may be connected, for example through the graphical interface, to pass signalling operations to each other so as to define complex interactions. Logic units may be provided between regions and paths to further process signalling operations so as to support further degrees of complexity. The operations of regions, paths, entities, connections and logical units can be presented in the graphical representation, for example as finite state machines.

Software embodiments include but are not limited to application, firmware, resident software, microcode, etc. The invention can take the form of a computer program product accessible from a computer-usable or computer-readable medium providing program code for use by or in connection with a computer or an instruction execution system. Software embodiments include software adapted to implement the steps discussed above with reference to figures 1 and 2.

A computer-usable or computer-readable can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium.

In some embodiments, the methods and processes described herein may be implemented in whole or part by a user device. These methods and processes may be implemented by computer-application programs or services, an application-programming interface (API), a library, and/or other computer-program product, or any combination of such entities.

The user device may be a mobile device such as a smart phone or tablet, a drone, a computer or any other device with processing capability, such as a robot or other connected device, including loT (Internet of Things) devices.

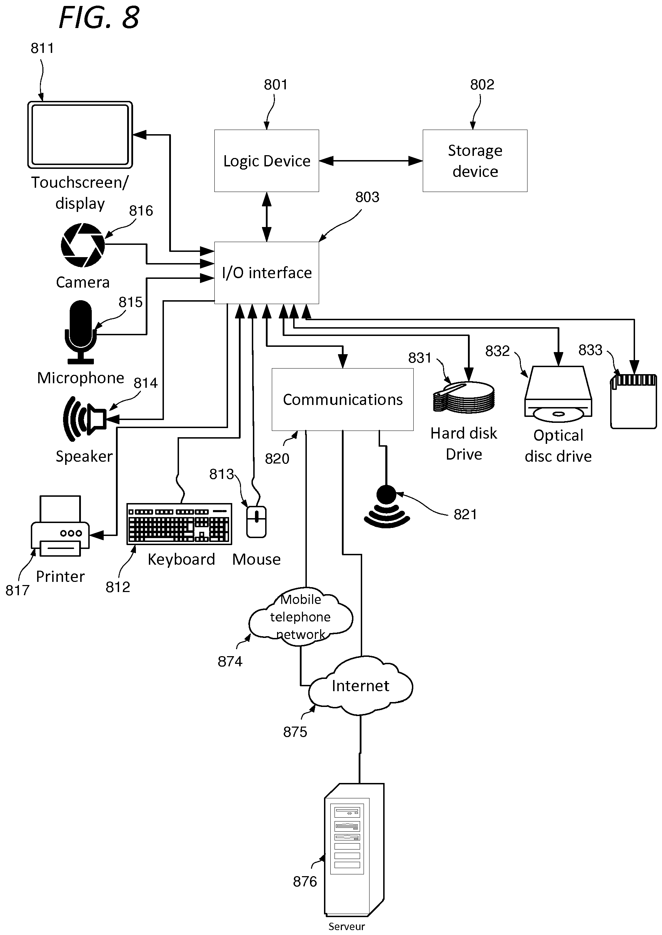

Figure 8 shows a generic computing system suitable for implementation of embodiments of the invention.

A shown in figure 8, a system includes a logic device 801 and a storage device 802. The system may optionally include a display subsystem 811, input/output subsystem 803, communication subsystem 820, and/or other components not shown.

Logic device 801 includes one or more physical devices configured to execute instructions. For example, the logic device 801 may be configured to execute instructions that are part of one or more applications, services, programs, routines, libraries, objects, components, data structures, or other logical constructs. Such instructions may be implemented to perform a task, implement a data type, transform the state of one or more components, achieve a technical effect, or otherwise arrive at a desired result.

The logic device 801 may include one or more processors configured to execute software instructions. Additionally or alternatively, the logic device may include one or more hardware or firmware logic devices configured to execute hardware or firmware instructions. Processors of the logic device may be single-core or multi-core, and the instructions executed thereon may be configured for sequential, parallel, and/or distributed processing. Individual components of the logic device 801 optionally may be distributed among two or more separate devices, which may be remotely located and/or configured for coordinated processing. Aspects of the logic device 801 may be virtualized and executed by remotely accessible, networked computing devices configured in a cloud-computing configuration.

Storage device 802 includes one or more physical devices configured to hold instructions executable by the logic device to implement the methods and processes described herein. When such methods and processes are implemented, the state of storage 802 device may be transformed-e.g., to hold different data.

Storage device 802 may include removable and/or built-in devices. Storage device may be locally or remotely stored (in a cloud for instance). Storage device 802 may comprise one or more types of storage device including optical memory (e.g., CD, DVD, HD-DVD, Blu-Ray Disc, etc.), semiconductor memory (e.g., FLASH, RAM, EPROM, EEPROM, etc.), and/or magnetic memory (e.g., hard-disk drive, floppy-disk drive, tape drive, MRAM, etc.), among others. Storage device may include volatile, non-volatile, dynamic, static, read/write, read-only, random-access, sequential-access, location-addressable, file-addressable, and/or content-addressable devices.

In certain arrangements, the system may comprise an interface 803 adapted to support communications between the logic device 801 and further system components. For example, additional system components may comprise removable and/or built-in extended storage devices. Extended storage devices may comprise one or more types of storage device including optical memory 832 (e.g., CD, DVD, HD-DVD, Blu-Ray Disc, etc.), semiconductor memory 833 (e.g., RAM, EPROM, EEPROM, FLASH etc.), and/or magnetic memory 831 (e.g., hard-disk drive, floppy-disk drive, tape drive, MRAM, etc.), among others. Such extended storage device may include volatile, non-volatile, dynamic, static, read/write, read-only, random-access, sequential-access, location-addressable, file-addressable, and/or content-addressable devices.

It will be appreciated that storage device includes one or more physical devices, and excludes propagating signals per se. However, aspects of the instructions described herein alternatively may be propagated by a communication medium (e.g., an electromagnetic signal, an optical signal, etc.), as opposed to being stored on a storage device.

Aspects of logic device 801 and storage device 802 may be integrated together into one or more hardware-logic components. Such hardware-logic components may include field-programmable gate arrays (FPGAs), program- and application-specific integrated circuits (PASIC/ASICs), program- and application-specific standard products (PSSP/ASSPs), system-on-a-chip (SOC), and complex programmable logic devices (CPLDs), for example.

The term "program" may be used to describe an aspect of computing system implemented to perform a particular function. In some cases, a program may be instantiated via logic device executing machine-readable instructions held by storage device 802. It will be understood that different modules may be instantiated from the same application, service, code block, object, library, routine, API, function, etc. Likewise, the same program may be instantiated by different applications, services, code blocks, objects, routines, APIs, functions, etc. The term "program" may encompass individual or groups of executable files, data files, libraries, drivers, scripts, database records, etc.

In particular, the system of figure 8 may be used to implement embodiments of the invention.

For example a program implementing the steps described with respect to figure 1 or 2, or the algorithms presented above may be stored in storage device 802 and executed by logic device 801. Information reflecting or defining the physical space, the entities, or the regions may be stored in storage device 802, 831, 832, 833. Information reflecting or defining the physical space, the entities, or the regions may be stored received via the communications interface 820. User input defining the regions may be received via the I/O interface 803 and in particular the touchscreen display 811, camera 816, microphone 815, mouse 813, keyboard 812 or otherwise. The functions of any or all of the units 710, 730, 750, may similarly be implemented by a program performing the required functions, in communication with additional dedicated hardware units as necessary. The display 811 may display the graphical representation of the physical space, and/or the regions, and/or the entities. Accordingly the invention may be embodied in the form of a computer program.

It will be appreciated that a "service", as used herein, is an application program executable across multiple user sessions. A service may be available to one or more system components, programs, and/or other services. In some implementations, a service may run on one or more server-computing devices.

When included, display subsystem 811 may be used to present a visual representation of data held by a storage device. This visual representation may take the form of a graphical user interface (GUI). As the herein described methods and processes change the data held by the storage device 802, and thus transform the state of the storage device 802, the state of display subsystem 811 may likewise be transformed to visually represent changes in the underlying data. Display subsystem 811 may include one or more display devices utilizing virtually any type of technology for example as discussed above. Such display devices may be combined with logic device and/or storage device in a shared enclosure, or such display devices may be peripheral display devices. An audio output such as speaker 814 may also be provided.

When included, input subsystem may comprise or interface with one or more user-input devices such as a keyboard 812, mouse 813, touch screen 811, or game controller (not shown). In some embodiments, the input subsystem may comprise or interface with selected natural user input (NUI) componentry. Such componentry may be integrated or peripheral, and the transduction and/or processing of input actions may be handled on- or off-board. Example NUI componentry may include a microphone 815 for speech and/or voice recognition; an infrared, colour, stereoscopic, and/or depth camera 816 for machine vision and/or gesture recognition; a head tracker, eye tracker, accelerometer, and/or gyroscope for motion detection and/or intent recognition; as well as electric-field sensing componentry for assessing brain activity. The input/output interface 803 may similarly interface with a loudspeaker 814, vibromotor or any other transducer device as may occur to the skilled person. For example, the system may interface with a printer 817.

When included, communication subsystem 820 may be configured to communicatively couple computing system with one or more other computing devices. For example, communication module of communicatively couple computing device to remote service hosted for example on a remote server 876 via a network of any size including for example a personal area network, local area network, wide area network, or internet. Communication subsystem may include wired and/or wireless communication devices compatible with one or more different communication protocols. As non-limiting examples, the communication subsystem may be configured for communication via a wireless telephone network 874, or a wired or wireless local- or wide-area network. In some embodiments, the communication subsystem may allow computing system to send and/or receive messages to and/or from other devices via a network such as Internet 875. The communications subsystem may additionally support short range inductive communications with passive or active devices (NFC, RFID, UHF, etc). In certain variants of the embodiments described above, the traffic data may be received via the telephone network 874 or Internet 875.

The system of figure 8 is intended to reflect a broad range of different types of information handling system. It will be appreciated that many of the subsystems and features described with respect to figure 8 are not required for implementation of the invention, but are included to reflect possible systems in accordance with the present invention. It will be appreciated that system architectures vary widely, and the relationship between the different sub-systems of figure 8 is merely schematic, and is likely to vary in terms of layout and the distribution of roles in systems. It will be appreciated that, in practice, systems are likely to incorporate different subsets of the various features and subsystems described with respect to figure 8.

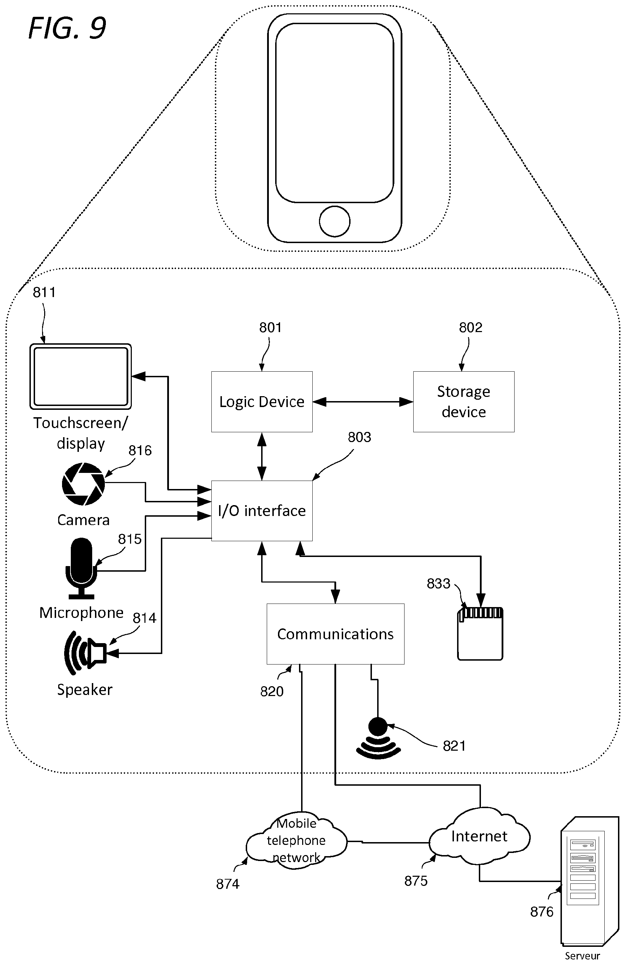

Figure 9 shows a smartphone device adaptable to constitute an embodiment. As shown in figure 9, the smartphone device incorporates elements 801, 802, 803, 820, optional near field communications interface 821, flash memory 833 and elements 814, 815, 816 and 811 as described above. It is in communication with the telephone network 874 and a server 876 via the network 875. Alternative communication mechanisms such as a dedicated network or Wi-Fi may also be used. The features disclosed in this figure may also be included within a tablet device as well.

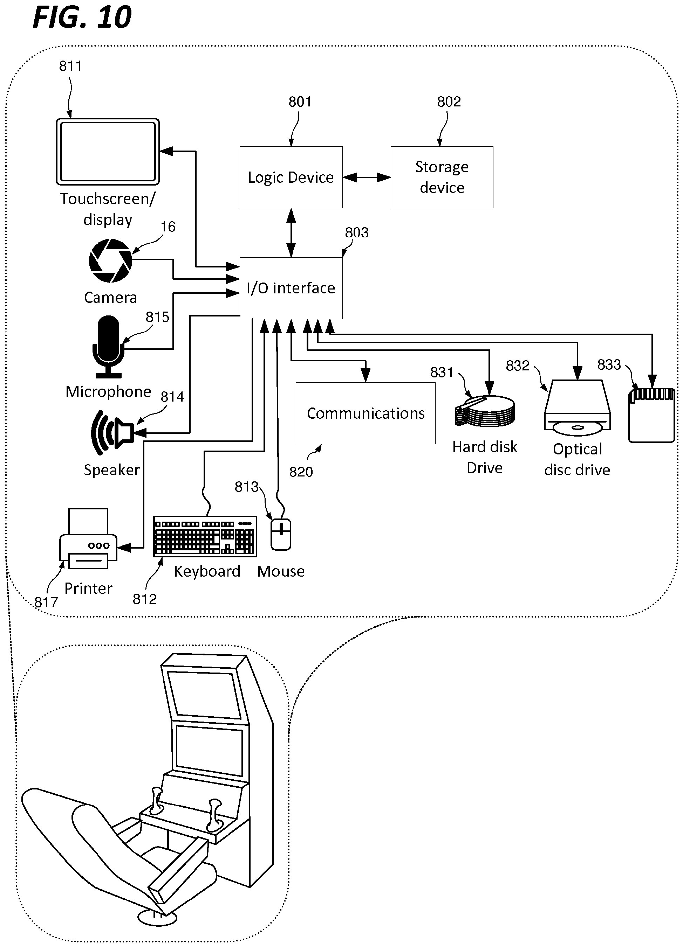

Figure 10 shows an Air Traffic control desk adaptable to constitute an embodiment. As shown in figure 10, the Air Traffic control desk comprises elements 801, 802, 803, 820, 814, 815, 816, 811, 831, 832, 833 as described above. As shown it is in communication with a drone 1001 via a communications satellite 1002 and a radio antenna 1003 coupled to the communications interface 820. As shown, the cockpit comprises a seat, and joysticks, either of which may constitute suitable locations for any user status sensors and/or vibration transducers as discussed above. Alternative communication mechanisms may also be used.

Further embodiments may be based on or include immersive environment devices such as the HTC vive, Oculus rift etc, or other hybrid device such as the Hololens Meta vision 2.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. An entity management system for managing a mobile entity in a physical space, said system comprising:
a representation generator adapted to generate a graphical representation of said physical space,
a region manager adapted to receive user input defining one or more regions belonging to one of a plurality of predefined types and to represent said regions in said graphical representation,
a management engine associating said regions with one or more said entities, each said predefined type being associated with one or more signalling actions triggered by a respective said entity interacting with a corresponding said region in a specified manner.

2. The entity management system of claim 1 wherein said region manager is adapted to determine when any said entity interacts with any said region associated with that respective entity in a corresponding said specified manner, and where said respective entity interacts with said region in said specified manner, to instruct said management engine to initiate said signalling action associated therewith.

3. A method of managing the behaviour of a mobile entity in a physical space, said method comprising the steps of:
defining a graphical representation of said physical space,
receiving user input defining one or more regions belonging to one of a plurality of predefined types in said graphical representation, said regions being associated with one or more said entities, wherein each said predefined type is associated with one or more signalling actions triggered by a respective said entity interacting with a corresponding said region in a specified manner, and
representing said one or more regions in said graphical representation.

4. The method of any of claim 3 comprising the further steps of determining when any said entity interacts with any said region associated with that respective entity in a corresponding said specified manner, and where said respective entity interacts with said region in said specified manner, initiating said signalling action associated therewith.

5. The method of any of claim 3 wherein the interactions with an entity triggering said signalling actions, or said signalling actions themselves relate to the movement of said entity in said physical space.

6. The method of claim 5 wherein a path is defined through said physical space, and wherein said region defines a termination point of said path, wherein a first alternative signalling action is initiated by said path in a case where a said entity leaves said path via said termination point.

7. The method of claim 5 wherein a path is defined through physical space, and wherein said region defines an entry point of said path, wherein a first alternative signalling action is initiated by said path in a case where a said entity enters said path via said entry point.

8. The method of claim 5 wherein said region defines a wait zone, wherein said signalling action comprises an instruction to said entity entering said region in a first mode of operation to halt, and wherein said signalling action comprises an instruction to said entity entering said region in a second mode of operation to proceed.

9. The method of claim 5 wherein said region defines a fork region, wherein said signalling action comprises an instruction to said entity entering said region in a first mode of operation to proceed along a first path, and wherein said signalling action comprises an instruction to said entity entering said region in a second mode of operation to proceed along a second path.

10. The method of any preceding claim wherein said signalling action further comprises an instruction to any other said region specifying a desired mode of operation thereof.

11. The method of claim 10 comprising a further step of defining a connection between a first said region and a further said region wherein said instruction to any other said region is issued to said further region in reaction to a relationship between an entity and said first region.

12. The method of any preceding claim wherein said signalling action comprising sending a signal to said entity.

13. The method of any preceding claim wherein a representation of the behaviour of any said region is included in said graphical representation.

14. The method of any preceding claim wherein the transmission of signals between any plurality of said regions is proceeded in accordance with a predefined boolean logic or state machine.

15. A computer program comprising instructions adapted to implement the steps of any of claims 3 to 14.
